# FASCICULE DE BREVET EUROPEEN

(11) **EP 4 422 843 B1**
(45) Date de publication et mention de la délivrance du brevet: **20.05.2026**
(21) Numéro de dépôt: 22813660.2
(22) Date de dépôt: 26.10.2022
(51) Int. Cl.: B65D 65/46, B65D 5/74, B29C 45/00, B65D 25/52, B29C 45/16

(54) **DISPOSITIF DE BEC VERSEUR RECYCLABLE**
RECYCELBARE AUSGIESSVORRICHTUNG
RECYCLABLE SPOUT DEVICE

(30) Priorité: 26.10.2021 FR 2111348
(43) Date de publication de la demande: 04.09.2024
(73) Titulaire: Viel, Daniel, 01100 Arbent (FR)
(72) Inventeur: Viel, Daniel, 01100 Arbent (FR)
(74) Mandataire: Germain Maureau
(86) Numéro de dépôt international: PCT/FR2022/052039
(87) Numéro de publication internationale: WO 2023/073324

(56) Documents cités:
- WO-A1-2016/079441
- US-A- 3 250 436
- US-A- 3 896 979
- US-A- 5 718 371
- US-B1- 9 604 754

## Description

La présente invention se rapporte à un dispositif de bec verseur destiné à être disposé sur un emballage pour faciliter le versement de son contenu. La présente invention concerne également un procédé de fabrication d'un tel dispositif.
De nombreux emballages plastiques contenant des aliments secs, des produits phytosanitaires, de la litière, des enduits, ou autres produits sous forme granulaire, etc... sont dotés de dispositifs de becs verseurs, eux-mêmes constitués de matière plastique. Ceux-ci sont majoritairement constitués d'un plastique bi-matière, ce qui réduit leur aptitude à être recyclés, de même que les emballages associés.

On connait par le document WO2016/079441 ou par le document US9604754 des dispositifs de bec verseur en matière plastique.

En parallèle, on voit naitre un engouement de plus en plus marqué des consommateurs et de certains industriels pour des emballages recyclables, tels que ceux constitués en papier fin ou en papier plus épais et rigide, dérivés de cellulose, tel que le carton. Toutefois aucune alternative aux becs verseurs en plastique, qui soit écologique et efficace n'existe sur le marché. Aussi, l'un des buts de la présente invention consiste à proposer un dispositif de bec verseur qui répond à la problématique sus visée, qui puisse être produit à bas coût, pour une utilisation à grande échelle et qui soit concurrentielle au bec verseur totalement plastique.

A cet effet, la présente invention concerne un dispositif de bec verseur pour un emballage selon la revendication 1.

Le dispositif ainsi configuré contient une quantité de matière plastique tellement minime que le dispositif de bec verseur entier peut être recyclé, lorsque le cadre et le capot sont en matériaux recyclables. De plus, la partie d'étanchéité couvrant le bord intérieur du cadre, le dispositif de bec verseur est étanche en position de fermeture du capot. Ceci est particulièrement utile lorsque le contenu de l'emballage est sensible à l'humidité.

Dans le présent document, les termes 'inférieur', 'supérieur', 'externe' et 'interne' sont définis lorsque le dispositif de bec verseur est fixé sur un emballage, l'emballage étant en disposé en condition de 'stockage' de son contenu.

De manière concrète le dispositif de bec verseur est bi-matière.

Avantageusement, le cadre et le capot sont en matériau rigide.

Le matériau rigide est dépourvu de matière plastique, il est notamment dépourvu de polyéthylène ou de polypropylène.

Selon une réalisation particulière, le dispositif de bec verseur comprend deux éléments d'étanchéité en film de matière plastique surmoulé sur le cadre, chacun des éléments d'étanchéité étant disposé sur au moins une partie de la surface externe du cadre en s'étendant au moins le long d'une partie d'un bord latéral délimitant latéralement l'ouverture de versement, de sorte que les éléments d'étanchéité sont en contact avec la partie d'étanchéité en position de fermeture du capot. Cette configuration permet d'améliorer l'étanchéité de l'ouverture de versement du bec verseur.

Selon une disposition, les deux joues sont chacune en film de matière plastique.

De manière concrète, les deux joues présentent chacune au moins trois lignes de pliage configurées de sorte qu'en position de fermeture du capot, les deux joues sont chacune rabattues sous la surface interne du capot, au-dessus de l'ouverture de versement du cadre. Ainsi, la partie d'étanchéité est au contact direct avec les deux éléments d'étanchéité en position de fermeture du capot.

Comme indiqué plus haut, par les termes 'surface interne' on entend dans le présent document une surface destinée à être orientée vers l'intérieur de l'emballage.

Selon une autre possibilité, le dispositif de bec verseur comprend une partie de fixation en film de matière plastique surmoulé sur le cadre, la partie de fixation étant disposée sur au moins partiellement la surface externe du cadre en s'étendant le long d'un bord périphérique externe du cadre. Cette partie de fixation est destinée à permettre la fixation sur l'emballage, par exemple par soudure. Lorsque l'emballage est de type papier, un film de protection, en plastique synthétique et/ou biosourcé notamment formé à partir de protéine, étanche très fin est généralement apposé sur la paroi intérieure de l'emballage (et plus exactement de la laize de l'emballage) afin notamment de garantir l'étanchéité du contenant. Il est alors aisé d'utiliser ce film de protection pour la fixation du dispositif de bec verseur via la partie de fixation en film plastique surmoulé.

Ainsi conçu, le dispositif de bec verseur selon l'invention comprend moins d'un gramme de plastique pour un dispositif d'environ 5 cm sur 8 cm.

En l'absence de cette partie de fixation en matière plastique et /ou en l'absence du film plastique sur la paroi intérieure de l'emballage, le dispositif de bec verseur est fixé sur l'emballage par l'intermédiaire d'une colle de type colle à papier.

Selon une possibilité, la partie de fixation enveloppe une arrête du bord périphérique externe du cadre.

De manière concrète, le capot, la charnière et le cadre sont formés de cellulose, notamment de carton. Le carton est en effet formé à base de cellulose se présentant sous la forme d'une feuille épaisse. La feuille de carton présente un grammage supérieur à 224 g/m², ce qui lui donne la rigidité nécessaire à la tenue sur l'emballage et à sa manipulation.

Toutefois, la cellulose et notamment le carton est une matière difficile à travailler notamment quand il est nécessaire d'utiliser des pièces de dimensions très précises comme c'est le cas dans la présente invention. En effet, le surmoulage d'une matière plus ou moins fluide sur une pièce solide, nécessite l'utilisation d'un moule d'une précision d'environ un dixième de millimètre. Ceci permet d'éviter l'infiltration de la matière en dehors des régions de surmoulage conçues pour recevoir ladite matière à surmouler et de recouvrir des régions non souhaitées de la pièce solide. Or, quel que soit le procédé d'obtention utilisé à ce jour pour obtenir une pièce en carton, les dimensions ne peuvent atteindre une précision au-delà d'une plage comprise entre 4 et 6 dixièmes de millimètres, ce qui est loin des contraintes à respecter pour une opération de surmoulage. Le carton est en effet comprimé lors de l'opération de découpe de sorte qu'une variation de dimension est observée entre le trait de coupe et la pièce finale obtenue. De plus, le carton absorbe très facilement l'humidité de l'atmosphère ce qui induit des changements de dimension dans le plan comme suivant l'épaisseur. Selon que la fabrication du carton est réalisée en atmosphère humide ou sèche, la pièce formée aura un écart de dimension, il est en de même pour la découpe de la pièce carton (i.e. capot et cadre charnière). Il en résulte qu'il est difficile d'obtenir des pièces cartons pour becs verseurs de dimensions précises et identiques d'un lot à un autre.

Selon une possibilité, la cadre et/ou le capot comprend une série d'orifices traversant configurée pour recevoir la matière plastique surmoulée. Ceci permet de renforcer la tenue de la matière plastique sur la matière constituant le cadre et/ou le capot.

La série d'orifice traversant est avantageusement disposée sous la partie de fixation et/ou sous la partie d'étanchéité.

Selon une disposition, les deux élements d'étanchéité sont venus de moulage avec la partie d'étanchéité, chacune des deux joues est venue de moulage avec la partie d'étanchéité, et/ou la partie de fixation est venue de moulage avec la partie d'étanchéité. Ceci facilite le surmoulage qui est réalisé en une seule étape.

Selon une caractéristique, la matière plastique est biosourcée. Elle est notamment formée à partir de maïs, algue, canne à sucre, blé, protéine animale, par exemple des protéines de lait, et notamment à partir de caséine et/ou caséinate etc... Ceci garantit un dispositif de bec verseur totalement écologique et facilement recyclable.

Par le terme «biosourcé », on entend dans le présent document 'fabriqué à partir de matières d'origine biologique'.

Il est entendu que la matière plastique utilisée est un matériau thermoplastique.

Selon une réalisation particulière, la portion d'étanchéité de liaison comprend une portion de préhension configurée pour permettre la préhension du capot.

Selon une possibilité, le cadre comprend une encoche configurée pour être encliquetée avec une dent.

De manière complémentaire, la portion de préhension comprend une dent configurée pour être encliquetée avec ladite encoche et fixer le capot au cadre en position de fermeture du capot. Ainsi le capot est verrouillé de manière amovible.

Selon une variante de réalisation, le dispositif de bec verseur comprend un troisième élément d'étanchéité de liaison en film de matière plastique surmoulé sur le cadre, reliant les deux élements d'étanchéité de sorte à former un ensemble d'étanchéité configuré pour entrer en contact avec la partie d'étanchéité en position de fermeture du capot. Cette disposition permet d'atteindre une grande surface de contact entre la partie d'étanchéité et l'ensemble d'étanchéité en film plastique permettant une très bonne étanchéité du dispositif en position de fermeture du capot.

Selon une possibilité, le troisième élément d'étanchéité de liaison est disposé sur au moins une partie de la face externe du cadre et s'étend au moins le long d'une partie du bord latéral délimitant latéralement l'ouverture de versement du cadre.

Selon une disposition, la partie d'étanchéité comprend une lèvre de fermeture s'étendant au moins partiellement le long d'un pourtour intérieur de la partie d'étanchéité de sorte à coopérer avec l'ensemble d'étanchéité en position de fermeture du capot.

Selon une possibilité la lèvre de fermeture est configurée pour coopérer avec un pourtour intérieur de l'ensemble d'étanchéité. Cette disposition permet le contact entre un bord périphérique externe de la lèvre de fermeture et un bord latéral délimitant latéralement l'ouverture de versement en position de fermeture du capot pour une très bonne étanchéité de dispositif.

De manière concrète, la lèvre de fermeture comprend au moins un moyen d'encliquetage configuré pour être encliqueté à l'ensemble d'étanchéité en position de fermeture du capot. Ainsi, le moyen d'encliquetage en matière plastique coopère avec l'ensemble d'étancheité également en matière plastique pour une très bonne coopération entre eux.

Selon une possibilité, le capot et le cadre sont formés d'une pièce en carton et comprennent chacun au moins une région comprimée jouxtant une région surmoulée. Une région surmoulée est une région de carton déterminée et paramétrée pour le surmoulage de la matière biosourcée, par exemple la partie d'étanchéité et au moins les deux régions d'étanchéité. Cette configuation permet de compenser les variations de taille de la pièce de carton constituant le cadre et le capot. Les interstices étant comblés, cette configuration évite l'infiltration indésirable de matière plastique biosourcée dans les régions comprimées en dehors des régions de surmoulage du carton, ainsi que dans les canelures du carton.

Lorsque l'invention prévoit un troisième élément d'étanchéité de liaison, le cadre comprend également une région comprimée jouxtant le troisième élément d'étanchéité de liaison.

Selon une disposition, les régions comprimées délimitent le contour des régions de surmoulage.

Selon une disposition, les régions comprimées délimitent la totalité du contour des régions de surmoulage.

Selon un deuxième aspect, l'invention propose un procédé de fabrication d'un dispositif de bec verseur tel que précédemment décrit, le procédé comprenant les étapes suivantes de :
- a) fourniture d'un cadre pourvu d'une ouverture de versement et d'un capot relié au cadre par une charnière,
- b) fourniture d'un moule configuré de sorte que le capot est disposé en position d'ouverture, et
- c) surmoulage de la matière plastique sur le cadre et le capot en position d'ouverture, de sorte à former au moins une partie d'étanchéité sur la partie d'une face externe du capot.

Selon une disposition l'étape c) de surmoulage comprend en outre la formation des deux éléments d'étanchéité et la partie de fixation sur le bord externe du cadre.

Selon une possibilité, l'étape c) de surmoulage comprend également la formation de chacune des deux joues de part et d'autre de la charnière.

Selon une disposition, l'emballage est à base de cellulose et/ou de matière plastique.

Selon une possibilité, le capot et le cadre sont formés d'une pièce en carton et le moule fourni à l'étape b) est configuré pour appliquer une pression sur au moins une région du capot et au moins une région du cadre jouxtant respectivement la partie d'étanchéité et au moins les deux régions d'étanchéité, de sorte à obtenir les régions comprimées.

Comme vu plus haut, les régions comprimées délimitent le contour des régions de surmoulage, voire délimitent la totalité du contour des régions de surmoulage.

Selon une possibilité, le moule comprend au moins une empreinte dont une première surface est conformée pour recevoir la matière plastique biosourcée et conduire à un surmoulage à pression atmosphérique de l'au moins une région de surmoulage.

Selon une autre possibilité, le moule comprend au moins une empreinte dont une deuxième surface est conformée pour comprimer au moins une région du cadre et/ou du capot et former au moins une région comprimée délimitant le contour de l'au moins une région de surmoulage.

Ainsi le moule de la présente invention est configuré pour réaliser un surmoulage sans appliquer de pression sur le plastique biosourcé pour obtenir les régions de surmoulage et également pour appliquer une pression sur des régions délimitant le contour des régions de surmoulage.

Cette configuration permet d'éviter l'infiltration de la matière plastique biosourcée lors du surmoulage de l'étape c) dans des cannelures du moule et/ou dans le matériau du cadre et du capot notamment lorsqu'il est en carton.

Selon une disposition, le procédé de fabrication comprend l'injection de la matière plastique biosourcée, notamment en protéines de lait, selon une plage de pression d'injection déterminée combinée à une plage de température de moule déterminée de sorte obtenir une adhérence de la matière plastique biosourcée sur le carton. La combinaison des plages de pression d'injection et de température de moule permet d'atteindre un compromis concernant la viscosité de la matière plastique biosourcée de sorte à permettre de remplir suffisamment rapidement le moule dans les régions de surmoulage, et à éviter une infiltration profonde dans le carton sous-jacent des régions de surmoulage qui est classiquement obtenu avec une viscosité trop faible. De la même façon, ces plages sont déterminées de sorte que la viscosité ne soit pas trop importante ce qui empêcherait la pénétration dans le carton et l'adhérence de deux matériaux

La demanderesse a en effet pu observer que contrairement à ce que l'on pouvait penser, l'utilisation de plastique biosourcé assez fluide génère une pénétration de la matière dans une épaisseur importante de carton générant une délamination à terme. Par ailleurs l'utilisation d'une matière biosourcée assez chaude a pour effet d'endommager la surface du carton de sorte que le plastique adhère peu, ce qui explique qu'il se décolle peu après le surmoulage.

Ainsi, en définissant une plage de pression, combinée avec une plage de température, il est possible d'atteindre une plage de viscosité et une température de résine de plastique biosourcé permettant une pénétration adéquate dans le carton, sans le déformer, afin d'atteindre une bonne adhérence entre les deux matières.

Ces caractéristiques permettent également d'optimiser une plage de vitesse d'injection notamment pour limiter l'endommagement des bords du carton sous l'effet de l'injection.

Selon d'autres caractéristiques, le dispositif de bec verseur de la présente invention comporte une ou plusieurs des caractéristiques optionnelles suivantes considérées seules ou en combinaison :
- La partie d'étanchéité s'étend dans le plan d'extension du capot.
- Les deux portions d'étanchéité latérales et la portion d'étanchéité de liaison forment une partie d'étanchéité continue.
- La partie d'étanchéité est surmoulée sur une longueur partielle du bord du capot. Deux portions du bord du capot dépourvues de la partie d'étanchéité s'étendent respectivement de part et d'autre de la charnière, et donc du côté inférieur du capot, de sorte à limiter l'encombrement et faciliter le pivotement du capot dans sa position de fermeture.
- Les dimensions du capot sont identiques à celles de l'ouverture de versement de sorte à être facilement fabriqué avant le surmoulage de matière plastique.
- La partie d'étanchéité est conçue pour être surmoulée au moins partiellement sur une arrête des deux côtés latéraux et une arrête du côté supérieur du capot.
- La portion d'étanchéité de liaison comprend des nervures présentant une épaisseur d'au plus 75% de l'épaisseur de la dent, de sorte à éviter un aplatissement de la dent lors des étapes ultérieures lors de la fabrication de l'emballage sur lequel le dispositif de bec verseur est fixé.
- L'angle maximal entre le capot et le cadre est d'environ 120° en position d'ouverture du capot.
- L'ouverture de versement est formée par une découpe dans le matériau constitutif du bec verseur, la découpe délimitant le capot relié au cadre par une charnière à son côté inférieur.
- Les deux éléments d'étanchéité recouvrent une arrête et une tranche desdits bords latéraux du cadre.
- Les deux éléments d'étanchéité recouvrent partiellement la face externe et la face interne du cadre
- Les deux éléments d'étanchéité présentent une portion de section en U conçue pour envelopper lesdits bords latéraux du cadre.
- Les deux éléments d'étanchéités sont disposés en face à face.
- Le troisième élément d'étanchéité de liaison recouvre partiellement la face externe et la face interne du cadre.
- Le troisième élément d'étanchéité de liaison recouvre au moins une arrête et une tranche dudit bord latéral du cadre.
- Le troisième élément d'étanchéité de liaison présente une portion de section en U conçue pour envelopper le bord latéral du cadre sur au moins une partie de l'ouverture de versement.
- le troisième élement d'étanchéité de laison recouvre un bord latéral de l'ouverture de versement.
- Les deux éléments d'étanchéité et le troisième élément d'étanchéité de liaison forment un ensemble d'étanchéité surmoulé sur le cadre.
- L'ensemble d'étanchéité est continu.
- Les deux joues sont chacune en papier.
- Les deux joues présentent chacune une forme globale trapézoïdale.
- Les deux joues présentent chacune au moins une ligne de pliage.
- Les deux joues présentent chacune trois lignes de pliage, chacune des deux joues est repliée le long d'au moins les trois lignes de pliage en position de fermeture du capot.
- Les au moins trois lignes de pliage comprennent une ligne de pliage central et deux lignes de pliages latérales, de part et d'autre de la ligne de pliage central.
- En position de fermeture du capot, les deux lignes de pliage latérales sont configurées pour former chacune un pli latéral rabattu sous la surface du capot, au-dessus de l'ouverture de versement du cadre.
- En position de fermeture du capot, la ligne de pliage central est configurée de sorte à former un pli central rabattu vers la bordure périphérique du capot.
- Les trois lignes de pliage sont configurées de sorte que chacun des deux plis latéraux présente au moins une face dont la surface est supérieure à celle du pli central.
- La partie de fixation recouvre la totalité du bord périphérique externe du cadre.
- La partie de fixation couvre la tranche et au moins partiellement, la seule surface externe du cadre. La surface interne du cadre est dépourvue de partie de fixation.
- La surface externe du cadre est reliée au capot par les deux joues.
- Au moins une portion d'étanchéité latérale comprend, à l'aplomb de la joue respective, une avancée transversale, par rapport à la direction d'extension longitudinale de chaque portion d'étanchéité latérale, l'avancée transversale s'étendant vers le centre du capot.
- Le troisième élement d'étanchété de liaison est venu de moulage avec les deux élements d'étanchéité, la partie d'étanchéité et chacune des deux joues.
- la lèvre de fermeture et l'au moins un moyen d'encliquetage sont venues de moulage avec la partie d'étanchéité.
- La matière plastique surmoulée est une matière plastique biosourcée.
- Le cadre, l'ouverture de versement et/ou le capot présente une forme globale de quadrilatère.
- Le capot présente une forme globale parallélépipédique rectangle.
- La lèvre de fermeture s'étend au moins en partie le long du pourtour intérieur des deux portions d'étanchéités latérales et de la portion d'étanchéité de liaison.
- La lèvre de fermeture présente une section transversale en forme de U inversé.

Selon d'autres caractéristiques, le dispositif de bec verseur de la présente invention comporte une ou plusieurs des caractéristiques optionnelles suivantes considérées seules ou en combinaison :
- L'étape c) de surmoulage comprend la formation du troisième élément d'étanchéité de liaison.
- L'étape c) de surmoulage comprend la formation de l'au moins une portion d'étanchéité latérale et de l'avancée transversale.
- L'étape c) de surmoulage comprend la formation de la lèvre de fermeture.
- L'étape c) de surmoulage comprend la formation de l'au moins un moyen d'encliquetage.
- Le surmoulage est effectué avec une seule nature de matière plastique.

D'autres caractéristiques et avantages apparaitront à la lecture de la description détaillée ci-après, de trois exemples de mise en œuvre non limitatifs, faite en référence aux figures annexées dans lesquelles :
[Fig.1] représente une vue en perspective de l'ensemble constitué du cadre du capot et de la charnière selon un mode de réalisation de l'invention.
[Fig.2] représente une vue en perspective du dispositif de bec verseur comprenant une partie d'étanchéité sur le capot, deux éléments d'étanchéité sur le cadre et deux joues reliant le cadre au capot selon un mode de réalisation de l'invention.
[Fig.3] représente une vue de dos du dispositif de bec verseur selon le mode de réalisation de l'invention illustré à la figure 2.
[Fig.4] représente une vue de dessous du dispositif de bec verseur selon le mode de réalisation de l'invention illustré à la figure 2.
[Fig.5] représente une vue en perspective du dispositif de bec verseur comprenant une partie d'étanchéité, deux éléments d'étanchéité, deux joues et des parties fixation sur le cadre, selon un deuxième mode de réalisation de l'invention.
[Fig.6] représente une vue de dos du dispositif de bec verseur selon le mode de réalisation de l'invention de la figure 5.
[Fig.7] représente une vue de dessous du dispositif de bec verseur selon le mode de réalisation de l'invention de la figure 5.
[Fig.8] représente une vue en perspective du dispositif de bec verseur selon un troisième mode de réalisation de l'invention.
[Fig.9] représente une vue de dessous du dispositif de bec verseur selon le mode de réalisation de la figure 8.

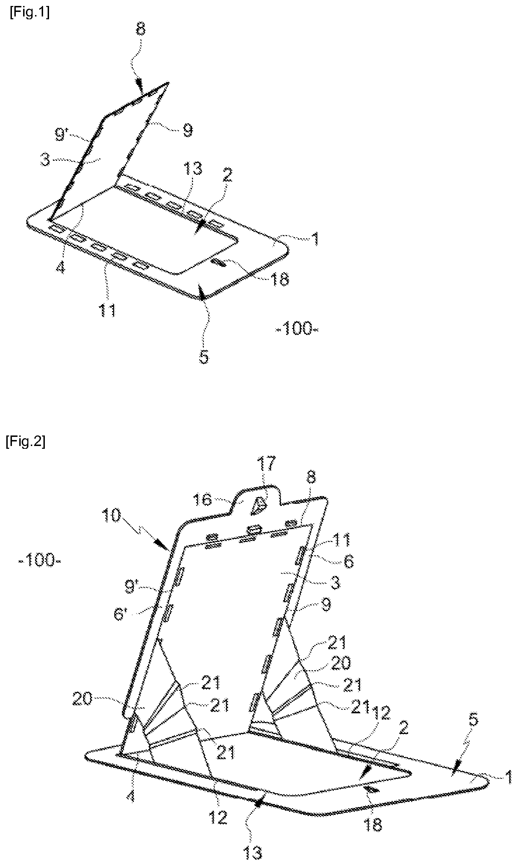

En référence à la figure 1, le dispositif de bec verseur 100 comprend un cadre 1, destiné à être fixé sur un emballage et dans lequel est ménagé une ouverture de versement 2, et un capot 3 dont un côté inférieur forme une charnière 4 le reliant au cadre 1. Le capot 3 est configuré pour pivoter entre une position de fermeture (non illustré) dans laquelle le capot 3 obture l'ouverture de versement 2 et une position d'ouverture (figures 1 à 7) dans lequel le capot 3 libère l'ouverture de versement 2. Le cadre 1 et le capot 3 sont constitués d'une feuille épaisse d'un matériau rigide en cellulose, tel qu'un carton, présentant un grammage supérieur à 224 g/m2. Le capot 3 provient avantageusement de la découpe de l'ouverture de versement 2 dans une plaque de carton aux dimensions du cadre 1 de sorte que le capot 3 et l'ouverture de versement 2 présentent les mêmes dimensions. Comme visible sur les figures, le cadre 1 et le capot 3 présente une forme de quadrilatère et notamment une forme globale parallélépipédique rectangle. Le côté inférieur (ou la charnière 4) du capot 3 est formé suivant la direction de la largeur du capot 3 mais selon une alternative non illustrée, la charnière 4 est formée suivant la direction de la longueur du capot 3. Selon une autre alternative non illustrée, le quadrilatère est un trapèze ou tout parallélogramme autre que le rectangle.

Le dispositif de bec verseur 100 selon l'invention comprend en outre une partie d'étanchéité 10 en matière plastique surmoulée s'étendant dans le plan d'extension du capot 3, de sorte à prolonger les dimensions du côté supérieur 8 du capot 3, (côté opposé au côté inférieur formant la charnière 4) et des deux côtés latéraux 9, 9' (visible figure 2 à 4). Ainsi, en position de fermeture du capot 3, la partie d'étanchéité 10 couvre et prend appui contre la surface externe 5 du cadre 1, sur chacun des bords latéraux délimitant l'ouverture de versement 2. Concrètement, la partie d'étanchéité 10 comprend deux portions d'étanchéité latérales 6,6' faisant saillies respectivement des deux côtés latéraux 9, 9' du capot 3 et une portion d'étanchéité de liaison 7 reliant les deux portions d'étanchéité latérales 6,6' en faisant saillie du côté supérieur 8 du capot 3. Bien que cela ne soit pas visible sur les vues en perspective, la portion d'étanchéité de liaison 7 vient couvrir le cadre 1 du bec verseur 100 en position de fermeture du capot 3.

Comme visible sur les figures 2, 4 et 5, la partie d'étanchéité 10 couvre également une partie de la face externe E du capot 3 (sous la forme de trois bandes) au travers de laquelle est prévue une série d'orifices traversant 11 (visible figures 1, 2 et suivantes) configurée pour recevoir de la matière plastique surmoulée. Cette configuration permet de renforcer la tenue de la partie d'étanchéité 10 en plastique sur le capot 3 en carton.

Selon une disposition non visible sur les figures, la matière plastique surmoulée est avantageusement constituée de plastique biosourcé. Ainsi le dispositif de bec verseur 100 constitué de cellulose et de plastique biosourcé est totalement recyclable.

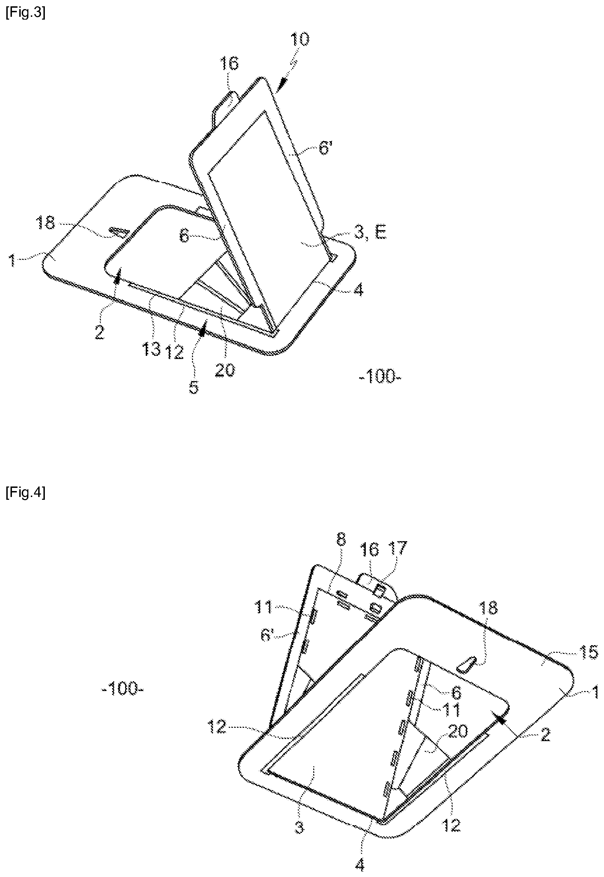

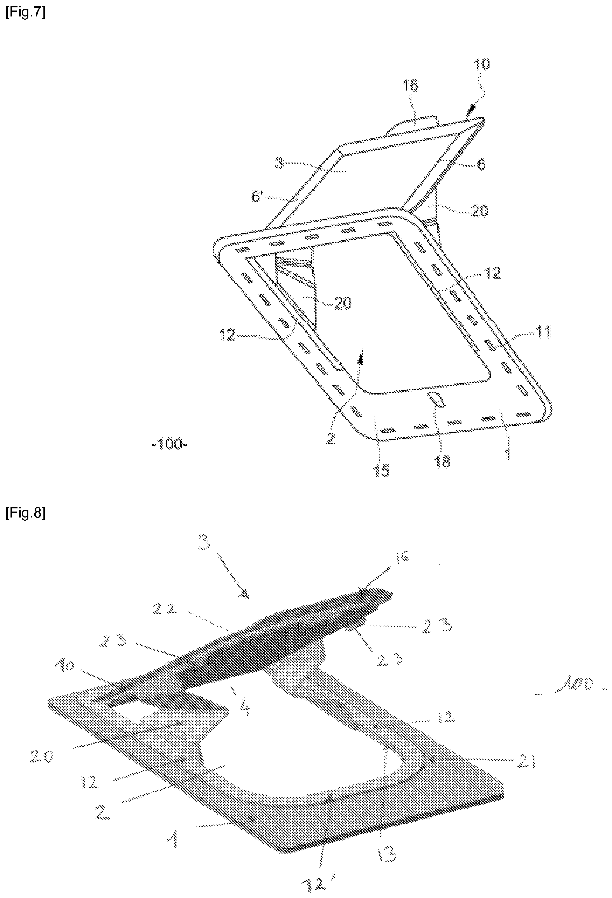

Egalement illustré aux figures 2 à 7, le dispositif de bec verseur 100 comprend deux éléments d'étanchéité 12 surmoulé sur le cadre 1. Précisément, chacun des deux éléments d'étanchéité 12 sont disposés sur au moins une partie de la surface externe 5 du cadre 1, en s'étendant partiellement le long d'un bord latéral 13 délimitant latéralement l'ouverture de versement 2 (figures 2 à 7). Ces deux éléments d'étanchéité 12 venus de moulage avec la partie d'étanchéité 10, recouvrent chacun la tranche d'un bord latéral 13 ainsi qu'une partie de la surface interne 15 du cadre 1 pour garantir une bonne tenue entre les deux matières (figures 4 et 7).

Ces deux éléments d'étanchéité 12 sur le cadre 1 sont en regard et au contact des deux portions d'étanchéité latérales 6, 6' du capot 3 en position de fermeture du capot 3 de sorte à permettre une très bonne étanchéité lors de l'obturation de l'ouverture de versement 2 et la conservation du contenu de l'emballage.

Dans ce mode de réalisation, le dispositif de bec verseur 100 est fixé à l'emballage par utilisation d'une colle, enduite sur l'emballage et/ou sur la surface externe 5 du cadre 1.

Egalement visible sur les figures, la portion d'étanchéité de liaison 7 comprend une protubérance 16 formant une portion de préhension configurée pour permettre la préhension du capot 3. Cette portion de préhension 16 est munie d'une dent 17 configurée pour coopérer et être encliquetée avec une encoche 18 prévue dans le cadre 1. Cette disposition permet fixer le capot 3 au cadre 1 en position de fermeture du capot 3 qui est alors verrouillé de manière amovible.

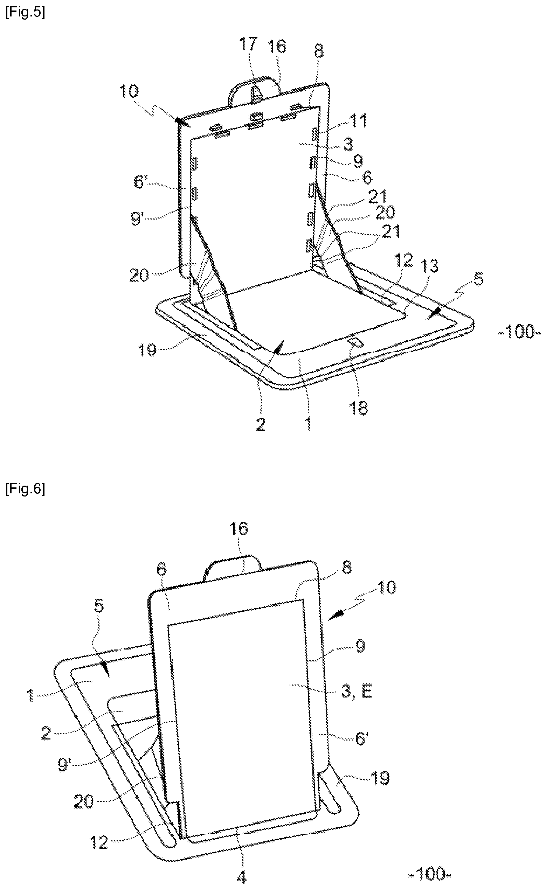

Le mode de mise en oeuvre de l'invention tel qu'illustré aux figures 5 à 7, diffère de celui illustré aux figures 2 à 4 notamment par la provision d'une partie de fixation 19 en film de matière plastique surmoulé sur le cadre 1. La partie de fixation 19 s'étend le long d'un bord périphérique externe du cadre 1 et une partie de la surface externe 5 du cadre 1 en remplissant une série d'orifices traversant 11 prévue dans le cadre 1, de sorte à améliorer la tenue du plastique sur le cadre 1 (visible figure 7). Cette configuration est utile pour permettre la fixation par soudure du bec verseur 100 à l'emballage. La partie de fixation 19 est venue de moulage avec la partie d'étanchéité 10.

Le dispositif 100 comprend également deux joues 20 reliant le capot 3 et le cadre 1. Ces deux joues 20 sont en un film de matière plastique (se référer aux figures 2 à 7), chacune venue de moulage avec la partie d'étanchéité 10. Chacune des joues 20 comprend trois lignes de pliage 21 configurées pour qu'en position de fermeture du capot 3, les joues 20 sont chacune rabattues sous le capot 3, sans entrer en contact avec la partie d'étanchéité 10 sur le capot 3 ni avec les deux éléments d'étanchéité 12 sur le cadre 1. Cette configuration permet d'augmenter l'angle d'ouverture du capot 3 vis-à-vis du cadre jusqu'à 120 degrés par exemple. Selon une autre disposition non illustrée, chacune des joues 20 présentent une seule ligne de pliage.

Selon une autre disposition non illustrée, les deux joues 20 sont en cellulose, notamment en papier.

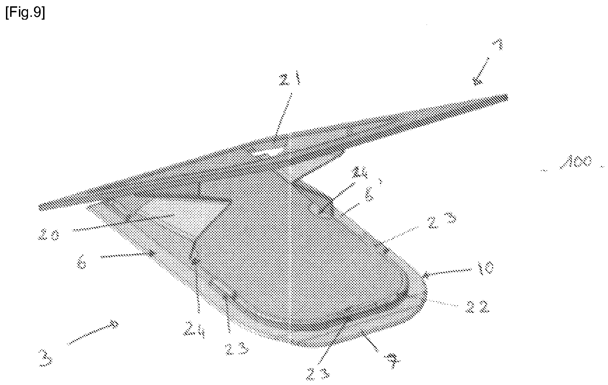

Selon un troisième mode de réalisation illustré aux figures 8 à 9, le dispositif de bec verseur 100 diffère des précédents décrits aux figures 1 à 7, en ce qu'il comprend en outre un troisième élément d'étanchéité de liaison 12' reliant les deux éléments d'étanchéité 12 surmoulés sur le cadre 1. Le troisième élément d'étanchéité de liaison 12' est en film de matière plastique, surmoulé sur le cadre 1 de sorte à être disposé sur au moins une partie de la surface externe 5 du cadre 1 en s'étendant au moins le long d'une partie du bord latéral 13 délimitant latéralement l'ouverture de versement 2 du cadre 1. Les deux éléments d'étanchéité 12 et le troisième élément d'étanchéité de liaison 12' forment ainsi un ensemble d'étanchéité 21 du cadre 1 qui coopère avec la partie d'étanchéité 10 en position de fermeture du capot 3. Selon ce troisième mode de réalisation illustré sur les figures 8 et 9, l'ensemble d'étanchéité 21 couvre la totalité du bord latéral 13 de l'ouverture de versement 2, hormis bien entendu la charnière 4. La partie d'étanchéité 10 peut ainsi prendre appui contre l'ensemble d'étanchéité 21 en position de fermeture du capot 3 ce qui optimise l'étanchéité du dispositif du bec verseur 100.

Egalement, une autre différence réside en ce que la partie d'étanchéité 10 surmoulée sur le capot 3 comprend une lèvre de fermeture 22 formant une proéminence à partir de la face interne du capot 3 (opposé à la face externe E). La lèvre de fermeture 22 s'étend au moins en partie le long du pourtour intérieur de la partie d'étanchéité 10. Cette lèvre de fermeture 22 est configurée pour coopérer avec l'ensemble d'étanchéité 21 couvrant un bord latéral 13 de l'ouverture de versement 2 qui s'étend dans la direction de l'épaisseur du cadre 1. Ceci permet l'insertion de la lèvre de fermeture 22 dans l'ouverture de versement 2 lors de la fermeture du capot 3 générant un contact serré entre les surfaces en face à face de l'ensemble d'étanchéité 21 (pourtour extérieur) et de la partie d'étanchéité 10 (pourtour intérieur).

De plus, comme illustré sur les figures 8 et 9, la lèvre de fermeture 22 est munie de trois moyens d'encliquetage, ici des ergots 23, configurés pour coopérer par encliquetage avec le bord latéral 13 de l'ouverture de versement 2 doté de l'ensemble d'étanchéité 21 afin de fermer de façon hermétique le dispositif du bec verseur 100. Selon un autre mode de réalisation non illustré, la lèvre de fermeture 22 peut comprendre un seul moyen d'encliquetage 23, disposé en position centrale de la portion d'étanchéité de liaison 7, comme une pluralité de moyens d'encliquetage 23 repartis sur le pourtour de la lèvre de fermeture 22. Il est alors possible de se passer de la dent 17 et l'encoche 18 des deux modes de réalisation précédemment décrits.

Comme on peut le voir sur les figures, la partie de fixation 19 s'étendant le long d'un bord périphérique externe du cadre 1 peut être omise dans ce troisième mode de réalisation comme c'est le cas dans le premier mode de réalisation illustré aux figures 1 à 4.

Ceci est utile lorsque le dispositif de bec verseur 100 est destiné à être assemblé à un emballage papier dépourvu de film plastique intérieur. Il est possible de coller la face interne du cadre 1 en carton sur l'emballage papier par exemple via un adhésif double face.

Lorsqu'au contraire l'emballage papier présente un film plastique sur sa surface intérieure, la présence de la partie de fixation 19 permet avantageusement la fixation par fusion des plastiques mis en contact.

Egalement visible sur la figure 9, chacune des portions d'étanchéité latérales 6, 6' comprend, à l'aplomb de la joue 20 correspondante, une avancée transversale 24, par rapport à la direction d'extension longitudinale de chaque portion d'étanchéité latérale 6,6', l'avancée transversale 24 s'étendant vers le centre du capot 1. Ceci permet notamment de tenir et rigidifier le capot 3 ainsi que la liaison entre les joues 20 et le capot 3.

Selon une réalisation non visible sur les figures, le dispositif de bec verseur comprend au moins une région comprimée jouxtant une région surmoulée. L'au moins une région comprimée délimite le contour de la région de surmoulage, telle que la partie d'étanchéité 10 et/ou l'ensemble d'étanchéité 21.

Selon un deuxième aspect non illustré, la présente invention propose un procédé de fabrication dudit dispositif de bec verseur 100 comprenant
une étape a) de fourniture d'un cadre 1 pourvu d'une ouverture de versement 2 et d'un capot 3 relié au cadre 1 par une charnière 4, tel qu'illustré à la figure 1,
une étape b) fourniture d'un moule configuré de sorte que le capot 3 est disposé en position d'ouverture (également visible figure 1), et
une étape c) surmoulage de la matière plastique sur le cadre 1 et le capot 3 en position d'ouverture, de sorte à former une partie d'étanchéité 10 sur le pourtour périphérique du capot 3 (partie d'étanchéité 10 visible figure 2) .

Ainsi, la présente invention propose un dispositif de bec verseur 100 recyclable, comprenant un cadre 1 et un capot 3 en un matériau rigide de cellulose, tel que du carton, et une partie d'étanchéité 10 sur le capot 3 et deux éléments d'étanchéité 12 sur le cadre 1, en matière plastique biosourcé. Le dispositif 100 est configuré pour être facilement fixé sur un emballage papier (par collage ou par fusion) de sorte à permettre un recyclage total.

Il va de soi que l'invention n'est pas limitée aux variantes de réalisation décrites cidessus à titre d'exemple mais par les revendications annexées.

## Revendications

1. Dispositif de bec verseur (100) pour un emballage, le dispositif de bec verseur (100) comprenant :
- un cadre (1) destiné à être fixé sur l'emballage, le cadre (1) étant pourvu d'une ouverture de versement (2),
- un capot (3) relié au cadre (1) par deux joues (20) et une charnière (4), la charnière (4) délimitant un côté inférieur du capot (3), le capot (3) étant configuré pour pivoter entre une position de fermeture dans lequel le capot (3) obture l'ouverture de versement (2) et une position d'ouverture dans laquelle le capot (3) libère l'ouverture de versement (2),
- une partie d'étanchéité (10) en matière plastique surmoulée sur le capot (3) et disposée sur au moins une partie d'une face externe (E) du capot (3) en s'étendant le long du bord du capot (3), la partie d'étanchéité (10) comprenant deux portions d'étanchéité latérales (6,6') qui font saillie respectivement des deux côtés latéraux (9, 9') du capot (3) et une portion d'étanchéité de liaison (7) reliant les deux portions d'étanchéité latérales (6,6') et faisant saillie d'un côté supérieur (8) du capot (3), les deux portions d'étanchéité latérales (6,6') et la portion d'étanchéité de liaison (7) étant configurées pour prendre appui contre une surface externe (5) du cadre (1) en position de fermeture du capot (3), le capot (3), la charnière (4) et le cadre (1) étant formés de cellulose.

2. Dispositif de bec verseur (100) selon la revendication 1, lequel comprend deux éléments d'étanchéité (12) en film de matière plastique surmoulé sur le cadre (1), chacun des éléments d'étanchéité (12) étant disposé sur au moins une partie de la surface externe (5) du cadre (1) en s'étendant au moins le long d'une partie d'un bord latéral (13) délimitant latéralement l'ouverture de versement (2), de sorte que les éléments d'étanchéité (12) sont en contact avec la partie d'étanchéité (10) en position de fermeture du capot (3).

3. Dispositif de bec verseur (100) selon l'une des revendications 1 ou 2, dans lequel les deux joues (20) sont chacune en film de matière plastique.

4. Dispositif de bec verseur (100) selon l'une des revendications 1 à 3, dans lequel les deux joues (20) présentent chacune au moins trois lignes de pliage (21) configurées de sorte qu'en position de fermeture du capot (3), les deux joues (20) sont chacune rabattues sous la surface du capot (3), au-dessus de l'ouverture de versement (2) du cadre (1).

5. Dispositif de bec verseur (100) selon l'une des revendications 1 à 4, lequel comprend une partie de fixation (19) en film de matière plastique surmoulé sur le cadre (1), la partie de fixation (19) étant disposée sur au moins en partie la surface externe (5) du cadre (1) en s'étendant le long d'un bord périphérique externe du cadre (1).

6. Dispositif de bec verseur (100) selon l'une des revendications 1 à 5, dans lequel le capot (3), la charnière (4) et le cadre (1) sont formés de carton.

7. Dispositif de bec verseur (100) selon l'une des revendications 1 à 6, dans lequel le cadre (1) et/ou le capot (3) comprend une série d'orifices traversant (11) configurée pour recevoir la matière plastique surmoulée, de sorte à renforcer la tenue de la matière plastique sur la matière constituant le cadre (1) et/ou le capot (3).

8. Dispositif de bec verseur (100) selon l'une des revendications 1 à 7, dans lequel les deux élements d'étanchéité (12) sont venus de moulage avec la partie d'étanchéité (10), chacune des deux joues (20) est venue de moulage avec la partie d'étanchéité (10), et/ou la partie de fixation (19) est venue de moulage avec la partie d'étanchéité (10).

9. Dispositif de bec verseur (100) selon l'une des revendications 1 à 8 précédente, dans lequel la matière plastique est biosourcée.

10. Dispositif de bec verseur (100) selon l'une des revendications 2 à 9, lequel comprenant un troisième élément d'étanchéité de liaison (12') en un film de matière plastique surmoulé sur le cadre (1), le troisième élément d'étanchéité de liaison (12') reliant les deux élements d'étanchéité (12) de sorte à former un ensemble d'étanchéité (21) configuré pour entrer en contact avec la partie d'étanchéité (10) en position de fermeture du capot (3).

11. Dispositif de bec verseur (100) selon la revendication 10, dans lequel le troisième élément d'étanchéité de liaison (12') est disposé sur au moins une partie de la face externe du cadre (1) et s'étend au moins le long d'une partie du bord latéral (13) délimitant latéralement l'ouverture de versement (2) du cadre (1).

12. Dispositif de bec verseur (100) selon la revendication 10 ou 11, dans lequel la partie d'étanchéité (10) comprend une lèvre de fermeture (22) s'étendant au moins partiellement le long d'un pourtour intérieur de la partie d'étanchéité (10) de sorte à coopérer avec l'ensemble d'étanchéité (21) en position de fermeture du capot (3).

13. Dispositif de bec verseur (100) selon la revendication 12, dans lequel la lèvre de fermeture (22) est configurée pour coopérer avec un pourtour intérieur de l'ensemble d'étanchéité (21).

14. Dispositif de bec verseur (100) selon la revendications 12 ou 13, dans lequel la lèvre de fermeture (22) comprend au moins un moyen d'encliquetage configuré pour être encliqueté à l'ensemble d'étanchéité (21) en position de fermeture du capot (3).

15. Procédé de fabrication d'un dispositif de bec verseur (100) selon l'une des revendications 1 à 14, comprenant les étapes suivantes de
- a) fourniture d'un cadre (1) pourvu d'une ouverture de versement (2) et d'un capot (3) relié au cadre (1) par une charnière (4),
- b) fourniture d'un moule configuré de sorte que le capot (3) est disposé en position d'ouverture, et
- c) surmoulage de la matière plastique sur le cadre (1) et le capot (3) en position d'ouverture, de sorte à former une partie d'étanchéité (10) sur le pourtour périphérique du capot (3).

## Patentansprüche

1. Ausgießvorrichtung (100) für eine Verpackung, wobei die Ausgießvorrichtung (100) umfasst:
- einen Rahmen (1), der zur Befestigung an der Verpackung bestimmt ist, wobei der Rahmen (1) mit einer Ausgießöffnung (2) versehen ist,
- eine Abdeckung (3), die über zwei Wangen (20) und ein Scharnier (4) mit dem Rahmen (1) verbunden ist, wobei das Scharnier (4) eine Unterseite der Abdeckung (3) begrenzt, wobei die Abdeckung (3) so eingerichtet ist, dass sie zwischen einer Schließposition, in der die Abdeckung (3) die Ausgießöffnung (2) verschließt, und einer Öffnungsposition, in der die Abdeckung (3) die Ausgießöffnung (2) freigibt, schwenkt,
- ein Dichtungsteil (10) aus Kunststoff, das auf die Abdeckung (3) aufgespritzt ist und an mindestens einem Teil einer Außenseite (E) der Abdeckung (3) angeordnet ist, die sich entlang der Kante der Abdeckung (3) erstreckt, wobei das Dichtungsteil (10) zwei seitliche Dichtungsabschnitte (6, 6') umfasst, die jeweils an den beiden seitlichen Seiten (9, 9') der Abdeckung (3) vorstehen, und einen Verbindungsdichtungsabschnitt (7), der die beiden seitlichen Dichtungsabschnitte (6, 6') verbindet und von einer oberen Seite (8) der Abdeckung (3) vorsteht, wobei die beiden seitlichen Dichtungsabschnitte (6, 6') und der Verbindungsdichtungsabschnitt (7) so eingerichtet sind, dass sie in der Schließposition der Abdeckung (3) an einer Außenfläche (5) des Rahmens (1) anliegen, wobei die Abdeckung (3), das Scharnier (4) und der Rahmen (1) aus Zellulose gebildet sind.

2. Ausgießvorrichtung (100) nach Anspruch 1, die zwei Dichtungselemente (12) aus Kunststofffolie umfasst, die auf den Rahmen (1) aufgespritzt sind, wobei jedes der Dichtungselemente (12) auf mindestens einem Teil der Außenfläche (5) des Rahmens (1) angeordnet ist und sich mindestens entlang eines Teils einer seitlichen Kante (13) erstreckt, die die Ausgießöffnung (2) seitlich begrenzt, so dass die Dichtungselemente (12) in der Schließposition der Abdeckung (3) mit dem Dichtungsteil (10) in Kontakt stehen.

3. Ausgießvorrichtung (100) nach einem der Ansprüche 1 oder 2, wobei die beiden Wangen (20) jeweils aus Kunststofffolie bestehen.

4. Ausgießvorrichtung (100) nach einem der Ansprüche 1 bis 3, wobei die beiden Wangen (20) jeweils mindestens drei Faltlinien (21) aufweisen, die so eingerichtet sind, dass in der Schließposition der Abdeckung (3) die beiden Wangen (20) jeweils unter die Oberfläche der Abdeckung (3) oberhalb der Ausgießöffnung (2) des Rahmens (1) umgeklappt sind.

5. Ausgießvorrichtung (100) nach einem der Ansprüche 1 bis 4, die einen Befestigungsteil (19) aus Kunststofffolie umfasst, der auf den Rahmen (1) aufgespritzt ist, wobei der Befestigungsteil (19) mindestens teilweise auf der Außenfläche (5) des Rahmens (1) angeordnet ist und sich entlang einer äußeren Umfangskante des Rahmens (1) erstreckt.

6. Ausgießvorrichtung (100) nach einem der Ansprüche 1 bis 5, wobei die Abdeckung (3), das Scharnier (4) und der Rahmen (1) aus Pappe gebildet sind.

7. Ausgießvorrichtung (100) nach einem der Ansprüche 1 bis 6, wobei der Rahmen (1) und/oder die Abdeckung (3) eine Reihe von Durchgangsöffnungen (11) umfasst, die so eingerichtet sind, dass sie das umspritzte Kunststoffmaterial aufnehmen, um die Haftung des Kunststoffmaterials auf dem Material, aus dem der Rahmen (1) und/oder die Abdeckung (3) bestehen, zu verstärken.

8. Ausgießvorrichtung (100) nach einem der Ansprüche 1 bis 7, wobei die beiden Dichtungselemente (12) einstückig mit dem Dichtungsteil (10) gegossen sind, jede der beiden Wangen (20) einstückig mit dem Dichtungsteil (10) gegossen ist und/oder der Befestigungsteil (19) einstückig mit dem Dichtungsteil (10) gegossen ist.

9. Ausgießvorrichtung (100) nach einem der vorhergehenden Ansprüche 1 bis 8, wobei der Kunststoff biobasiert ist.

10. Ausgießvorrichtung (100) nach einem der Ansprüche 2 bis 9, die ein drittes Verbindungsdichtungselement (12') aus einer Kunststofffolie umfasst, die auf den Rahmen (1) aufgespritzt ist, wobei das dritte Verbindungsdichtungselement (12') die beiden Dichtungselemente (12) so verbindet, dass eine Dichtungsbaugruppe (21) gebildet wird, die so eingerichtet ist, dass sie in der Schließposition der Abdeckung (3) mit dem Dichtungsteil (10) in Kontakt kommt.

11. Ausgießvorrichtung (100) nach Anspruch 10, wobei das dritte Verbindungsdichtungselement (12') an mindestens einem Teil der Außenseite des Rahmens (1) angeordnet ist und sich mindestens entlang eines Teils der seitlichen Kante (13) erstreckt, die die Ausgießöffnung (2) des Rahmens (1) seitlich begrenzt.

12. Ausgießvorrichtung (100) nach Anspruch 10 oder 11, wobei der Dichtungsteil (10) eine Verschlusslippe (22) umfasst, die sich mindestens teilweise entlang eines Innenumfangs des Dichtungsteils (10) erstreckt, so dass sie mit der Dichtungsbaugruppe (21) in der Schließposition der Abdeckung (3) zusammenarbeitet.

13. Ausgießvorrichtung (100) nach Anspruch 12, wobei die Verschlusslippe (22) so eingerichtet ist, dass sie mit einem Innenumfang der Dichtungsbaugruppe (21) zusammenarbeitet.

14. Ausgießvorrichtung (100) nach Anspruch 12 oder 13, wobei die Verschlusslippe (22) mindestens ein Rastmittel umfasst, das so eingerichtet ist, dass es in der Schließposition der Abdeckung (3) an der Dichtungsbaugruppe (21) einrastet.

15. Verfahren zur Herstellung einer Ausgießvorrichtung (100) nach einem der Ansprüche 1 bis 14, umfassend die folgenden Schritte:
- a) Bereitstellen eines Rahmens (1), der mit einer Ausgießöffnung (2) und einer Abdeckung (3) versehen ist, die mit dem Rahmen (1) durch ein Scharnier (4) verbunden ist,
- b) Bereitstellen einer Form, die so eingerichtet ist, dass die Abdeckung (3) in der Öffnungsposition angeordnet ist, und
- c) Umspritzen des Kunststoffs auf den Rahmen (1) und die Abdeckung (3) in der Öffnungsposition, so dass am Umfang der Abdeckung (3) ein Dichtungsteil (10) entsteht.

## Claims

1. A pouring spout device (100) for a package, the pouring spout device (100) comprising:
- a frame (1) intended to be fastened to the package, the frame (1) being provided with a pouring opening (2),
- a cover (3) connected to the frame (1) by two side walls (20) and a hinge (4), the hinge (4) delimiting a lower side of the cover (3), the cover (3) being configured to pivot between a closed position in which the cover (3) closes off the pouring opening (2) and an open position in which the cover (3) releases the pouring opening (2),
- a sealing part (10) made of plastic material overmolded onto the cover (3) and disposed on at least one part of an external face (E) of the cover (3) extending along the edge of the cover (3), the sealing part (10) comprising two lateral sealing portions (6,6') which project respectively from the two lateral sides (9, 9') of the cover (3) and a connecting sealing portion (7) connecting the two lateral sealing portions (6,6') and projecting from an upper side (8) of the cover (3), the two lateral sealing portions (6,6') and the connecting sealing portion (7) being configured to bear against an external surface (5) of the frame (1) in the closed position of the cover (3), the cover (3), the hinge (4) and the frame (1) being formed of cellulose.

2. The pouring spout device (100) according to claim 1, which comprises two sealing elements (12) made of a film of plastic material overmolded onto the frame (1), each of the sealing elements (12) being disposed on at least one part of the external surface (5) of the frame (1) extending at least along a part of a lateral edge (13) laterally delimiting the pouring opening (2), so that the sealing elements (12) are in contact with the sealing part (10) in the closed position of the cover (3).

3. The pouring spout device (100) according to any of claims 1 or 2, wherein the two side walls (20) are each made of a film of plastic material.

4. The pouring spout device (100) according to any of claims 1 to 3, wherein the two side walls (20) each have at least three fold lines (21) configured such that, in the closed position of the cover (3), the two side walls (20) are each folded under the surface of the cover (3), above the pouring opening (2) of the frame (1).

5. The pouring spout device (100) according to any of claims 1 to 4, which comprises a fastening part (19) made of a film of plastic material overmolded onto the frame (1), the fastening part (19) being disposed at least partially on the external surface (5) of the frame (1) extending along an external peripheral edge of the frame (1).

6. The pouring spout device (100) according to any of claims 1 to 5, wherein the cover (3), the hinge (4), and the frame (1) are made of cardboard.

7. The pouring spout device (100) according to any of claims 1 to 6, wherein the frame (1) and/or the cover (3) comprises a series of through holes (11) configured to receive the overmolded plastic material, so as to reinforce the retention of the plastic material on the material constituting the frame (1) and/or the cover (3).

8. The pouring spout device (100) according to any of claims 1 to 7, wherein the two sealing elements (12) are integrally molded with the sealing part (10), each of the two side walls (20) is integrally molded with the sealing part (10), and/or the fastening part (19) is integrally molded with the sealing part (10).

9. The pouring spout device (100) according to any one of the preceding claims 1 to 8, wherein the plastic material is biosourced.

10. The pouring spout device (100) according to any of claims 2 to 9, which comprises a third connecting sealing element (12') made of a film of plastic material overmolded onto the frame (1), the third connecting sealing element (12) connecting the two sealing elements (12) so as to form a sealing assembly (21) configured to come into contact with the sealing part (10) in the closed position of the cover (3).

11. The pouring spout device (100) according to claim 10, wherein the third connecting sealing element (12') is disposed on at least one part of the external face of the frame (1) and extends at least along a part of the lateral edge (13) laterally defining the pouring opening (2) of the frame (1).

12. The pouring spout device (100) according to claim 10 or 11, wherein the sealing part (10) comprises a closing lip (22) extending at least partially along an inner periphery of the sealing part (10) so as to cooperate with the sealing assembly (21) in the closed position of the cover (3).

13. The pouring spout device (100) according to claim 12, wherein the closing lip (22) is configured to cooperate with an inner periphery of the sealing assembly (21).

14. The pouring spout device (100) according to claim 12 or 13, wherein the closing lip (22) comprises at least one snap-fitting means configured to be snap-fitted to the sealing assembly (21) in the closed position of the cover (3).

15. A method for manufacturing a pouring spout device (100) according to any of claims 1 to 14, comprising the following steps of
- a) providing a frame (1) provided with a pouring opening (2) and a cover (3) connected to the frame (1) by a hinge (4),
- b) providing a mold configured so that the cover (3) is disposed in the open position, and
- c) overmolding the plastic material onto the frame (1) and the cover (3) in the open position, so as to form a sealing part (10) on the peripheral contour of the cover (2).
